# EUROPEAN PATENT APPLICATION

(11) **EP 1 674 871 A1**
(43) Date of publication of application: **28.06.2006**
(21) Application number: 05257864.8
(22) Date of filing: 20.12.2005
(51) Int. Cl.: G01N 35/00, C12M 1/00

(54) **Methods for improving consistency in assays through additional motion**

(30) Priority: 21.12.2004 US 637679 P
(71) Applicant: ORTHO-CLINICAL DIAGNOSTICS, INC., Rochester, New York 14626 (US)
(72) Inventor: Arter, Thomas Charles, Rochester NY 14612 (US); Jacobs, Merrit N., Fairport NY 14450 (US)
(74) Representative: Mercer, Christopher Paul

(57) **Abstract**

A method of providing motion to a sample during a reaction phase in an incubator of a clinical analyzer includes: providing an analyzer containing an incubator, wherein the incubator has one or more cells for containing sample and optionally one or more reagents; moving the incubator to position one or more cells to perform an operation, the operation includes dispensing a sample and optionally one or more reagents into each of the one or more cells; and additionally moving the incubator in such a manner that the number of motions of the one or more cells during the reaction phase for an assay does not substantially change as a function of the number of samples being analyzed in the incubator or the order of the sample in the incubator for the same assay. Also disclosed is a method for increasing precision for multiple assays in a clinical analyzer, which includes: providing an analyzer containing an incubator, wherein the incubator has two or more cells for containing sample to be assayed and optionally one or more reagents; moving the incubator to position the two or more cells to perform an operation, the operation includes dispensing a sample and optionally one or more reagents into each of the two or more cells; and additionally moving the sample prior to performing a measurement of the sample, such that samples receiving the step of additionally moving have greater precision than samples which do not receive the step of additionally moving.

## Description

### BACKGROUND OF THE INVENTION

The present invention relates to providing additional motion during processing of assays in clinical analyzers, particularly random access analyzers. In particular, the present invention relates to providing consistent incubator motion to improve the performance of agglutination based assays in a clinical analyzer.

Known assays include those that involve an agglutination or precipitation reaction between the substance or analyte to be measured and one or more reactants. After a suitable incubation time, the result of the reaction between the analyte and reactant(s) is a precipitate or agglutinate that may be measured by turbidimetric or nephlometric analysis. Examples of known agglutination assays include immunoglobulin G (IgG), prealbumin (PALB), transferrin (TRFRN), and microalbumin (MALB).

In many applications, the sample being assayed is maintained at a constant temperature. After a set period of time, a measuring device, such as an optical measuring device is used to pass a beam of light through the cuvette and sample. The result, e.g. absorbance or fluorescence, is measured by a photometer of the optical device. Other techniques, such as enhanced chemiluminesence, use a luminometer to read emitted light from the sample. Other examples of techniques used to assay an analyte in a sample include spectrophotometric absorbance assays such as end-point reaction analysis and rate of reaction analysis, turbidimetric assays, nephelometric assays, colorimetric assays, and fluorometric assays, and immunoassays, all of which are well known in the art.

Known analyzers having incubators include those described, for example, in U.S. Patent Application Publication 2003/0022380, published January 30, 2003 and incorporated herein by reference in its entirety or analyzers described in U.S. Patent No. 6,096,561 and U.S. Application No. 09/482,599 filed January 13, 2000 entitled "Failure Detection in Automatic Clinical Analyzers," which disclose immunoassay analyzers that include container wash stations for washing containers containing one or more analytes bound to coated sample containers that are measured, for example, by chemiluminescence. Examples of such analyzers can include chemistry analyzers, immunodiagnostic analyzers and blood screening analyzers. Commercially available clinical analyzers are sold under the trade name, Vitros® 5,1 FS and Vitros® ECi both sold by Ortho-Clinical Diagnostics, Inc and Konelab™ 60, sold by Thermo Electron Corporation.

In a clinical analyzer such as the Vitros®5,1 FS, the system includes an incubator for multi-cell cuvettes. The cells of the cuvette contain a sample to be analyzed. One or more reagent(s) are added to the sample and a reaction takes place. The sample and reagent(s) are allowed to incubate. In many known analyzers, the sample in the incubator is linked with other samples in the incubator. That is, motion in one sample will result in motion in all of the samples. Thus, unless only a single result is processed in the incubator during the reaction phase of the assay, unlikely in most commercial random access analyzers, the sample will experience motion due to operations taking place in the other linked samples by virtue of the fact that motion is generally applied to the incubator. For example, a sample is aliquoted into a cuvette cell or well, the sample then moves to a metering location to have reagent(s) added. The sample is then further moved into an incubating position. If this is the only sample, then the sample will be stationary during the entire incubation or reaction phase time, e.g., 4 or 5 minutes or even longer. However, if the sample is linked to other samples in the incubator, the sample will experience movement during incubation as other samples are aliquoted into cells or have reagents metered into them, etc. Thus, depending on subsequent operations on different samples, a sample being incubated will be subjected to varying degrees of motion.

The present inventors identified a decrease in precision occurring on several assays, particularly in the protein assays described above. The decreases in precision generally occurred in larger batches (e.g., 20 samples or more), appeared to be proportionally greater at higher concentrations, and the observed shifts (that caused the degraded precision) were between 5% and 12% in magnitude. The assays found to have the decreased precision were non-particle enhanced agglutination assays. In these assays, the number and size of the agglutinated structure increases with concentration.

For the foregoing reasons, there is a need for a method that reduces or preferably eliminates imprecision in agglutinated assays and other types of assays.

### SUMMARY OF THE INVENTION

After extensive investigation, the present inventors found that the decrease in precision observed in certain assays, particularly agglutination assays, was due, at least in part, to inconsistent motion being applied to a sample through the incubator during processing of the samples. As described above, depending on the number and placement of samples being processed in a linked incubator system, each sample may be subjected to differing amounts of incubator motion depending on the subsequent processing steps or operations that each sample is subjected to. Prior to the present invention, the state of the art did not recognize assays, particularly agglutination assays, being sensitive to changes in the motion of the incubator.

The present invention is directed to a system and method that solves the foregoing need of increasing precision in assays used in clinical analyzers, particularly agglutination assays.

One aspect of the invention includes a method of providing motion to a sample during a reaction phase in an incubator of a clinical analyzer. The method includes: providing an analyzer containing an incubator, wherein the incubator has one or more cells for containing sample and optionally one or more reagents; moving the incubator to position one or more cells to perform an operation, said operation includes dispensing a sample and optionally one or more reagents into each of the one or more cells; and additionally moving the incubator in such a manner that the number of motions of the one or more cells during the reaction phase for an assay does not substantially change as a function of the number of samples being analyzed in the incubator or the order of the sample in the incubator for the same assay.

Another aspect of the invention provides a method of increasing precision for multiple assays in a clinical analyzer. The method includes:
providing an analyzer containing an incubator, wherein the incubator has two or more cells for containing sample to be assayed and optionally one or more reagents; moving the incubator to position the two or more cells to perform an operation, said operation includes dispensing a sample and optionally one or more reagents into each of the two or more cells; and additionally moving the sample prior to performing a measurement of the sample, such that samples receiving the step of additionally moving have greater precision than samples which do not receive the step of additionally moving.

Still another aspect of the invention provides a method for measuring the presence or concentration of an analyte in a sample. The method includes providing a sample and moving the incubator as described above; providing an optical measurement station having at least a detector for detecting emitted light for taking a photometric measurement of the sample; transporting the cell into the optical measurement station; taking at least one measurement that includes measuring emitted light from the cell with the detector.

Further objects, features and advantages of the present invention will be apparent to those skilled in the art from detailed consideration of the preferred embodiments that follow.

### BRIEF DESCRIPTION OF THE DRAWINGS

Figure 1 is a graph showing the total number of moves an incubator makes based on various additional moves added to each incubator cycle.
Figure 2 is a graph showing the number of incubator moves versus results for IgG.
Figure 3 is a graph showing the consistency of reported IgG concentration between cell locations in a 10 assay batch and a 30 assay batch for batches with no added motion to the incubator and batches with added incubator motion.

### DETAILED DESCRIPTION OF PREFERRED EMBODIMENTS

The present invention is directed to a system and method that solves the foregoing need of increasing precision in assays used in clinical analyzers, particularly agglutination assays. As noted above, the present inventors found that decreases in precision observed in certain assays, particularly agglutination assays, were found to be due to inconsistent motion applied to samples during processing of the sample, particularly during the reaction phase. This is particularly the case in linked incubator systems, where motion of the incubator to bring a sample into alignment for an operation, e.g. dispensing or aspirating, will cause the same corresponding motion to other samples also in the incubator. Depending on the number and placement of samples being processed in a linked incubator system, each sample may be subjected to differing amounts of incubator motion depending on the subsequent processing steps that each sample is subjected to.

Prior to the present invention, the state of the art associated with processing assays, particularly agglutination assays, did not recognize these assays being sensitive to inconsistent motion applied to the incubator. In fact, it was contrary to conventional wisdom to add any unnecessary motion to a sample, because adding motion to samples, such as adding incubator motion has the potential of causing other problems, such as:
- Slowing throughput of samples through the analyzer,
- Venting the cell thus causing increased evaporation,
- Inducing excessive energy into the cuvette so that the fluid spills, splashes, or bubbles, and/or
- Disrupting agglutinated structures in the case of agglutination assays.

However, the inventors found that providing additional motion to each assay, either by providing consistent motion to the incubator, or providing motion immediately prior to the measurement, increased precision for agglutination assays. Thus, in one preferred embodiment, the method of the present invention includes providing additional motion to the sample, preferably through moving the incubator, where necessary, so that any particular assay (e.g., IgG) will always have a more consistent and preferably approximately the same number of motions regardless of what other assays are being run in the incubator at the same time or the number of samples being analyzed. The added motion is preferably performed in a manner that produces approximately the same motion effect across a range from running one assay at a time to running at maximum throughput, i.e., as many assays at a time as the instrument will allow. In an alternative embodiment, motion may be provided just prior to the measurement or read. This can be accomplished by shaking the cell either in the incubator or outside of the incubator to allow for additional motion to, e.g., allow the agglutinate to be evenly dispersed throughout the reaction cell.

Once the source of increased imprecision for agglutination assays was discovered (i.e., inconsistent motion of the incubator), the impact of incubator motion in a random access clinical analyzer can be applied to improve other classes of assays, e.g. chemiluminesence assays. Improvement in these classes of assays will likely result from different chemical mechanisms than agglutination assays; however, the solution of providing additional motion to the sample during analysis in the analyzer provided by the present invention will likely produce the same benefit. For microwell assays like those used in immunoassay analyzers, the antibody binding occurs on the surface of the well, such as a strepavadin coated well. Motion of the fluid in the well will impact the rate that the reaction proceeds. Variation in the number of incubator moves will therefore likely impact rate of the reaction. This becomes a greater factor for assays that have not approached binding equilibrium. Testing has verified that most assays are not close to binding equilibrium. Thus, additional motion of the sample during incubation is believed to improve the rate of reaction and more quickly bring the assay to binding equilibrium. Other assays (such as colorimetric assays) could be also adversely be affected by inconsistent incubator motion because of the impact on heat transfer and fluid mixing as a function of the number of incubator moves while the assay is being processed in the analyzer.

As used herein "cell" or "well" refers to the container that contains the sample that is analyzed. Cell and well can be used interchangeably with each other, unless otherwise indicated. The cells usable in the present invention can include integral containers having multiple cells, such as the multi-cell cuvette. Alternatively, the cells can be containers having only a single cell, such as a single cuvette. The cells can also be configured as a cup, such as the streptavidin coated micro-well described in, e.g., U.S. Patent No. 5,441,895, which describes stackable containers. The only requirement is that at least two cells containing sample are linked in such a manner that movement of one cell for processing results in movement for the other cell.

In a preferred embodiment, the container is a multi-cell cuvette, which is provided for containing a sample. The cuvette preferably is used in connection with a clinical analyzer. In a preferred embodiment, the cuvette is an open top cuvette adapted for receiving the tip of a pipette or proboscis which dispenses or aspirates sample and/or reagents into the cuvette, such as those described for example, in U.S. Patent Application Publication No. 2003/0003591 A1, Des. 290,170 and U.S. Patent No. 4,639,135, all of which are incorporated by reference in their entireties. Particularly preferred are multi-cell cuvettes having a plurality of vertically disposed reaction chambers side-by-side in spaced relation, each of the reaction chambers having an open top and being sized for retaining a volume of sample or reagent as described in the '591 published application. In another preferred embodiment, the container can be a cup-shaped micro-well, such as those described in Serial No. 09/482,599, filed January 13, 2000, entitled "Failure Detection In Automated Clinical Analyzers," preferably streptavidin coated micro-wells which are held on rotatable incubators and are used in enhanced chemiluminesence technology.

The incubators usable in the present invention include those known in the art. They can include block-type incubators that hold cuvettes in a front-to-back configuration, and that move back and forth to present cells containing sample to different operations, such as aspirating or dispensing metering, or a spectrophotometric read. Preferred block-type incubators are described in co-pending application entitled "Heating And Cooling Multiple Containers Or Multi-Chamber Containers" filed on November 12, 2004, (attorney docket No. CDS 5025), which is incorporated by reference in its entirety.

Other incubators can include ring-type incubators such as those shown in Figure 4 of Serial No. 09/482,599. In these embodiments, the cell (e.g., a cup-shaped microwell) are placed on the perimeter of the rotor. The rotor is rotated within the incubator housing to present the cells to the appropriate operation, e.g., dispensing, aspirating, washing, reading, etc.

The time from when reactant(s) are added to the sample until the sample is measured, e.g., by an optical detection system, is termed the "reaction phase." Generally, if the sample were the only one being analyzed, then the sample would remain stationary during the reaction phase. However, in a random access analyzer, other assays are almost always being carried out. Thus, the sample during the reaction phase will undergo additional motion due to the other samples in the incubator being subjected to other operations, e.g., aspirate, dispense, measurement. Hence, the source of inconsistent motion.

In one preferred embodiment, the method includes providing additional incubator movements during cycles in a reaction phase when the incubator would normally be idle or not moving so that all samples processed for a particular assay (e.g., IgG) in the incubator experience essentially the same amount of kinetic energy or at least a similar amount of kinetic energy while the sample is being processed during the reaction phase. That is, this embodiment adds motion to produce approximately the same number of movements (i.e., same amount of motion) for a particular assay during incubation regardless the number of samples being analyzed in the analyzer or the sample's positioning in the incubator. That is, the number of motions that a sample receives will not substantially change as a function of the number of samples being analyzed or the position of the sample in the analyzer for a particular assay. The objective is to give each sample relatively consistent motion with respect to other samples being assayed for the same analyte, e.g., all samples being analyzed for IgG will receive the same amount of motion.

One sufficient measure for defining the difference in the amount of motion a sample receives as a function of the number of samples being analyzed or the position of the sample in the incubator is to describe it in terms of the coefficient of variation (standard deviation/mean). In the present invention, the mean is the average number of motions that each sample receives during the reaction phase regardless of its position or number of samples. The standard deviation measures the variation in the number of motions from sample to sample. Thus, the coefficient of variation ("CV") will be a unitless number. In the present invention, the percentage CV will preferably be ≤20%, more preferably ≤15%, even more preferably ≤10%, and most preferably ≤5%.

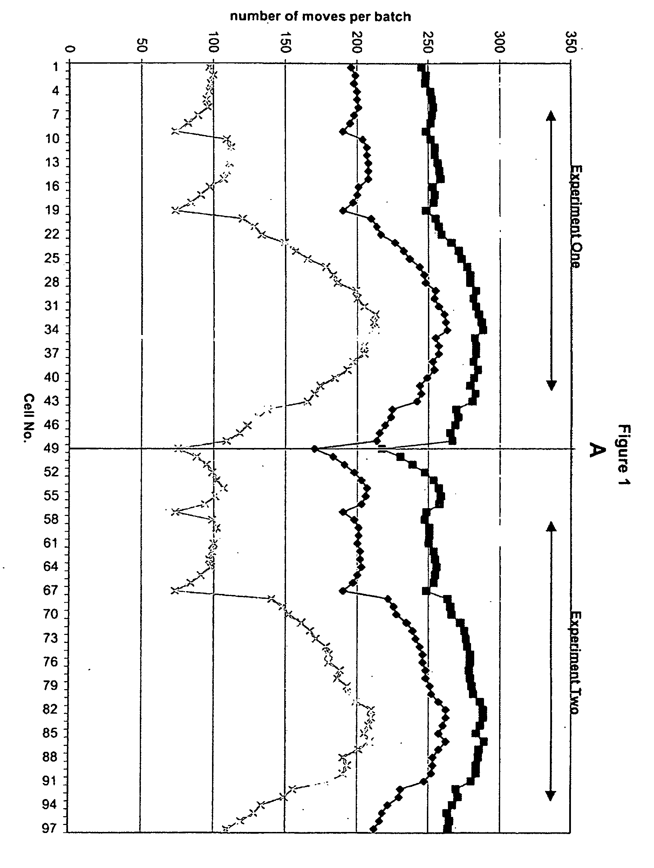

Another way of expressing the difference in the amount of motion that a sample receives during incubation with and without additional motion is to express it in terms of the improvement in precision, or alternatively, reduction in imprecision, which is simply the percent reduction in the CV between analysis with additional motion and no additional motion, this is explained further in connection with Figure 1 below. In a preferred embodiment, the percent reduction in CV will generally be ≥50%, preferably ≥70%, more preferably ≥ 80%, and most preferably ≥90%.

As used herein, a "cycle" is a selected time provided in which an operation (e.g., dispensing, aspirating, adding or removing cells, etc.) takes place in the incubator during the reaction phase. During an active cycle, an operation will be performed. The cycle time may be variable to provide the exact amount of time required for each operation, e.g., if an operation takes 3.5 seconds, the cycle time will be 3.5 seconds, and if another operation takes 5 seconds, the cycle time will be 5 seconds. More preferably, however, the cycle time will be constant and not vary. Thus, after performance of the operation, the cell will remain motionless if the cycle time has not completed. For example, if the cycle time is 5 seconds, but a reagent dispense takes 2 seconds to perform, the incubator holding the cell will not move to the next operation, but instead will remain motionless for another 3 seconds for a total of 5 seconds. If an operation has been performed, at the end of the cycle, the cell will move to another position for other operations or to allow the same operation to be performed on yet another cell. This provides the motion to the cell. However, in some cycles, an operation may not be scheduled, because, e.g., there are not any cells requiring operation, such as an aspirate or dispense, etc. In these cycles, termed open or free cycles, there will be no movement required and hence no movement for the cells. Depending on its place in the incubator, as shown below in Figure 1, some cells will experience more free cycles than other cells and, hence, receive less overall kinetic energy, because of less motion. In a preferred embodiment, a fixed 4.75 second cycle is used.

Figure 1 shows the number of motion cycles that a sample experiences as a function of processing a standardized test developed to show the greatest effect of incubator motion on IgG assays. In Figure 1 two identical sets of experiments were carried out. The two sets of experiments are separated by the vertical line A in the center of the graph. Within each experiment, three sets of batches were carried out. The first two batches had 10 cells each. The first batch in the first experiment is labeled 1-10 along the y-axis and the second batch is labeled 11-20. For these two batches, 10 assays at a time were analyzed on a random access analyzer. The third batch had 30 cells labeled 21-50. For this third batch, 30 samples at a time were analyzed on a random access analyzer. For the second experiment, the batches were, correspondingly, 51-60, 61-70 and 71-100. The plot marked with "x" as the data point shows the number of moves each sample in a cell in a particular batch experiences throughout the assay. For example, cell number 1 in the first batch or number 11 in the second batch is the first cell that is acted on (i.e., has sample dispensed in it, reagents, etc.) in each batch. The number of movements the cell experiences is approximately 100. In contrast, cells 9 or 19 experience approximately 75 movements for each batch. Thus, the first cell of a 10 sample batch experiences approximately 33 percent greater movements than the next to last cell. More strikingly, in a 30 cell batch, some cells have more than 200 movements in a batch, whereas the lowest number of movements were approximately 75, approximately a 166 percent greater number of movements.

The data points with diamonds, squares and triangles show the effect as increasing number of motions are added to each free cycle. The data points with diamonds (0) show the number of motions each cell experiences with 2 moves added to an incubator during each free cycle. The data points with squares (■) show the number of motions each cell experiences with 3 moves added to an incubator during each free cycle. The data points with triangles (A) show the number of motions each cell experiences with 4 moves added to an incubator during each free cycle. As Figure 1 shows, there is a substantial leveling of the number of incubator moves per cell as the number of moves is increased for each free cycle. The inventors found that for this particular embodiment, the most uniform processing of incubator motion occurred when four added incubator moves were added to each free incubator cycle. The analysis of data from Figure 1 is as follows:

| | # of inc moves with 2 added per free cycle | # of inc moves with 3 added per free cycle | # of inc moves with 4 added per free cycle | # of inc moves with NONE added |
|---|---|---|---|---|
| mean | 224.8763 | 266.2216 | 307.567 | 142.1856 |
| sd | 24.88568 | 15.09518 | 7.774032 | 45.5431 |
| %cv | 11.06639 | 5.670154 | 2.52759 | 32.03074 |

This data shows an approximately 92% reduction in motion imprecision using percent CV values (from 32.03% to 2.53%) for assays with four additional moves added per free cycle compared to assays with no additional moves added per free cycle.

Preferably, the added motion will not contribute to additional evaporation of sample/reagents from the cell. This can be prevented by ensuring that the cell remains covered in the incubator during the added motion. In the experiments carried out in Figure 1 and in a preferred embodiment, the incubator motion was an incubator such as that described in co-pending application entitled "Heating And Cooling Multiple Containers Or Multi-Chamber Containers" filed on November 12, 2004, (attorney docket No. CDS 5025), incorporated by reference in its entirety. In embodiments that use this type of incubator, the movement is preferably limited to one incubator slot (i.e., one movement forward or back to advance the cell one length) to prevent the cells from losing evaporation control during the added incubation motion cycles. That is, the more limited motion keeps the cells under the evaporation cover when this process is started from the initial or home position.

In another preferred embodiment, the added motion has the same or similar acceleration and de-acceleration profiles as the motion of a cell containing sample normally experiences. Increasing the rate of acceleration and de-acceleration did not cause splashing or bubbles in the fluid, but it did change the relationship between number of incubator moves and performance producing a less linear relationship, and thus, is not as preferred.

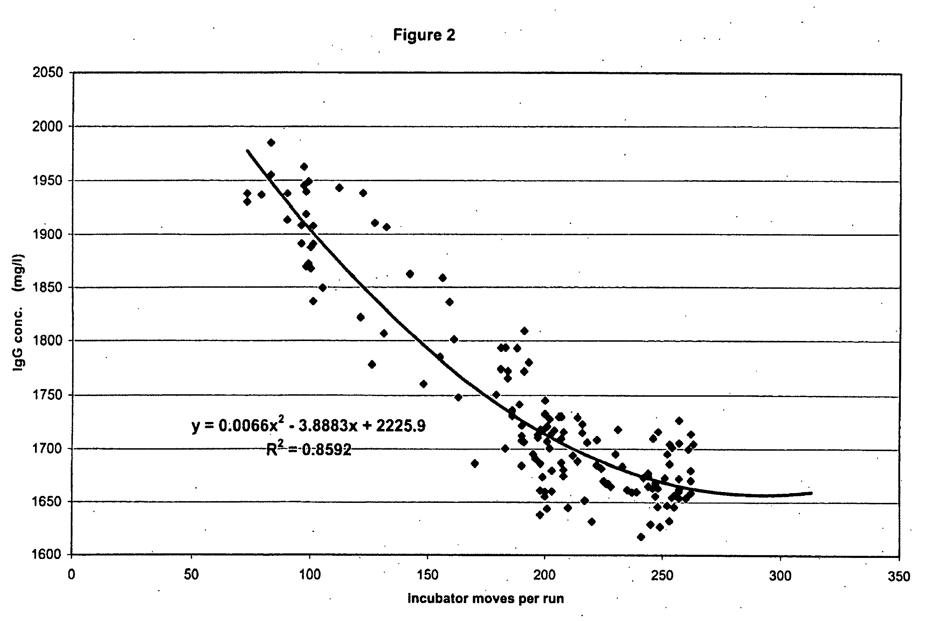

Figure 2 demonstrates another effect of adding motion to cells. Specifically, as the number of cell motions increases, the sensitivity to incubator motion decreases. Figure 2 shows results for IgG assays versus the number of cell moves per assay. The data shown as diamonds (0) demonstrates that as the number of movements per cell increases, the IgG result decreases. Thus, a cell containing a sample subjected to 75 movements per run versus a cell subjected to 250-300 movements per assay will have a significant difference in reported values for IgG. The data in Figure 2 also demonstrates that as the number of cell movements increases, a leveling trend in reported assay results occurs. The curve formed from the data of Figure 2 starts to level at around 250 moves per assay. Thus, if every cell has at least 250 movements, the precision between each reported result will be significantly improved.

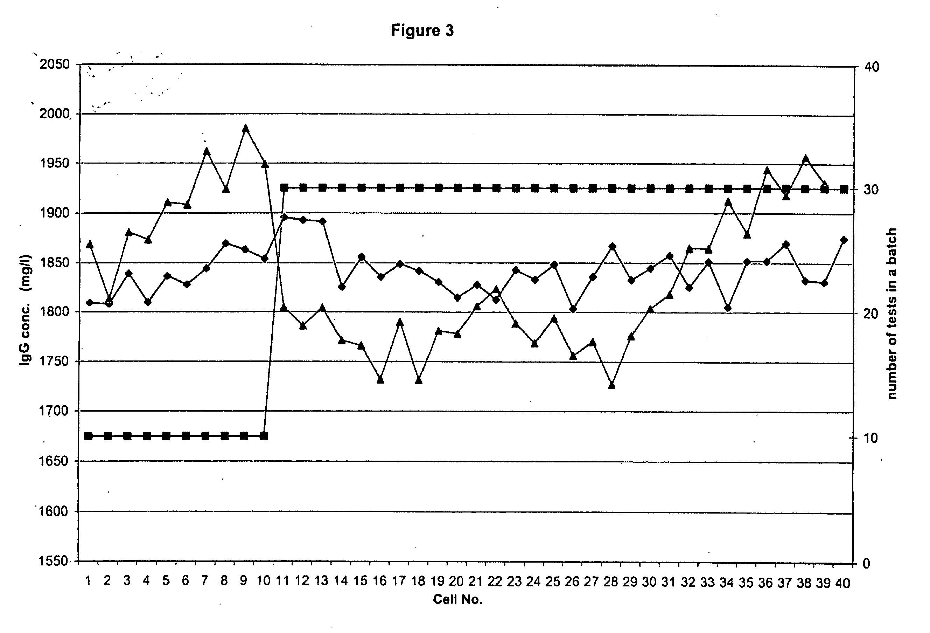

Figure 3 further illustrates the improvement in assay precision, in this case, IgG assay precision with and without the added cell motion. The graph of Figure 3 is broken into two sets of experiments, each having a different number of assays. The number of tests or assays is shown on the scale on the right axis of Figure 3 and is plotted as squares (■). Thus, the first set of experiments had 10 tests or assays in a batch and the order of each cell in the incubator is labeled on the horizontal axis as 1-10. The second set of experiments had 30 tests or assays and the order of each cell in the incubator is labeled on the horizontal axis as 11-40. The data points shown as triangles (A) are an average of 2 runs with no added motion (called baseline performance). As shown in Figure 1, the amount of incubator motion during a reaction phase will always drop off substantially at the end of a batch independent of the number of assays in the batch. This helps to explain why the results in Figure 3 for the last assays in the 10 assay (i.e., cell number 10) and 30 assay batches (i.e., cell number 40) are nearly identical. In the test carried out in connection with the figures, the end of batches are similar because the number of process steps are fewer at the end of batches. In fact at the very end of a batch only one active cell is always in the incubator. The data points shown as diamonds (0) are an average of 8 batches with three added motions per free incubator cycle in the reaction phase of each sample. As the data in Figure 3 demonstrates, when motion is added, the difference between reported results significantly narrows both within the 10 and 30 assay batches and between the 10 and 30 assays batches. That is, the in-run precision of the IgG assay is 2 to 3 times greater when motion is added compared to no added motion (i.e., change in CV was 4% to 1.4%).

In a preferred embodiment, the optimal amount of added motion on different analyzer configurations can be determined by analyzing the total number of cycles that a cell will experience in a run and then calculating the standard deviation of the number of cycles as a function of various run profiles and selecting the process that produces the lowest standard deviation. This is a numerical approach. Alternatively, a graphical approach (such as shown in Figures 1-3) will be sufficient, particularly, if various attempts to add incubator motions produce clearly noticeable increases in uniformity. As shown in the figures, optimal uniformity was achieved with four additional motions per free cycles.

The methods according to the present invention can be implemented by a computer program, having computer readable program code, interfacing with the computer controller of the analyzer as is known in the art.

It will be apparent to those skilled in the art that various modifications and variations can be made to the compounds, compositions and processes of this invention. Thus, it is intended that the present invention cover such modifications and variations, provided they come within the scope of the appended claims and their equivalents.

The disclosure of all publications cited above are expressly incorporated herein by reference in their entireties to the same extent as if each were incorporated by reference individually.

## Claims

1. A method of providing motion to a sample during a reaction phase in an incubator of a clinical analyzer, comprising:
providing an analyzer containing an incubator, wherein the incubator has one or more cells for containing sample and optionally one or more reagents;
moving the incubator to position one or more cells to perform an operation, said operation includes dispensing a sample and optionally one or more reagents into each of the one or more cells; and
additionally moving the incubator in such a manner that the number of motions of the one or more cells during the reaction phase for an assay does not substantially change as a function of the number of samples being analyzed in the incubator or the order of the sample in the incubator for the same assay.

2. A method as claimed in claim 1, further comprising adding at least one reagent and wherein the reaction phase is the time from when the at least one reagent is added until a measurement of the sample is performed.

3. A method as claimed in claim 1, wherein the number of motions of the one or more cells during the reaction phase does not change as a function of the number of samples being analyzed in the incubator.

4. A method as claimed in claim 1, wherein all cells are subjected to the step of additionally moving such that the same number of motions occur only after all fluids have been added to the cell.

5. A method as claimed in claim 1, wherein the reaction phase includes multiple timed cycles, which are periods of selected time that the operation may be performed.

6. A method as claimed in claim 5, wherein at least one cycle is a free cycle during which no operation is performed and at least one cycle is an active cycle during which an operation is performed.

7. A method as claimed in claim 6, further providing the step of additionally moving the incubator during at least one free cycle.

8. A method as claimed in claim 6, wherein the step of providing additional motion to the incubator is during all free cycles.

9. A method as claimed in claim 8, wherein the step of providing additional motion is to both the free cycles and active cycles, whereby all cycles have the same number of motions.

10. A method as claimed in claim 6, wherein the step of providing additional motion comprises at least two motions added during the at least one free cycle.

11. A method as claimed in claim 6, wherein the step of providing additional motion comprises at least three motions added during or at the end of the at least one free cycle.

12. A method as claimed in claim 6, wherein the step of providing additional motion comprises at least four motions are added during or at the end of the at least one free cycle.

13. A method as claimed in claim 1, wherein the percentage the coefficient of variation between cells receiving the additional motion and cells receiving no additional motion is less than or equal to 20%.

14. A method according to claim 5, wherein the operations include aspirating, dispensing, and removal of the cell from the incubator.

15. A method according to claim 1, wherein the cells are multi-well cuvettes having at least two side-by-side wells and the incubator has slots to hold at least two cuvettes in a front to back configuration.

16. A method according to claim 15, wherein the cuvettes have at least six side-by-side wells and the incubator includes slots to hold at least six cuvettes.

17. A method according to claim 15, wherein the motion is a back and forth motion.

18. A method according to claim 1, wherein the cells are cup-shaped micro-wells and the incubator is a rotating ring capable of holding the cup-shaped micro-wells.

19. A method as claimed in claim 18, wherein the micro-wells are streptavidin coated.

20. A method as claimed in claim 1, wherein the assay is an agglutination or precipitation assay and the method of analysis is turbidmetric or nephlometric analysis.

21. A method as claimed in claim 20, wherein the assay is a protein assay.

22. A method as claimed in claim 21, wherein the assay is for immunoglobulin G (IgG), prealbumin (PALB), transferring (TRFRN) and microalbumin (MALB).

23. A method of increasing precision for multiple assays in a clinical analyzer, comprising:
providing an analyzer containing an incubator, wherein the incubator has two or more cells for containing sample to be assayed and optionally one or more reagents;
moving the incubator to position the two or more cells to perform an operation, said operation includes dispensing a sample and optionally one or more reagents into each of the two or more cells; and
additionally moving the sample prior to performing a measurement of the sample, such that samples receiving the step of additionally moving have greater precision than samples which do not receive the step of additionally moving.

24. A method as claimed in claim 23, wherein the step of additionally moving is immediately prior to the measurement.

25. A method as claimed in claim 23, wherein the assay is an agglutination or precipitation assay and the method of analysis is turbidmetric or nephlometric analysis.

26. A method as claimed in claim 25, wherein the assay is a protein assay.

27. A method as claimed in claim 26, wherein the assay is for immunoglobulin G (IgG), prealbumin (PALB) and microalbumin (MALB).

28. A method for measuring the presence or concentration of an analyte in a sample, comprising:
providing a sample and moving the incubator according to claim 1;
providing an optical measurement station having at least a detector for detecting emitted light for taking a photometric measurement of the sample;
transporting the cell into the optical measurement station;
taking at least one measurement that includes measuring emitted light from the cell with the detector.

29. A method as claimed in claim 28, wherein the analysis is absorption spectrophotometry, the cell is a cuvette and the optical measurement includes a light source which directs a beam of light through the sample and a photometer for detecting emitted light from the sample.

30. A method according to claim 29, wherein the two or more cells are multi-well cuvettes having at least two side-by-side wells and the incubator has slots to hold at least two cuvettes in a front to back configuration.

31. A method according to claim 30, wherein the cuvettes have at least six side-by-side wells and the incubator includes slots to hold at least six cuvettes.

32. A method according to claim 31, wherein the motion is a back and forth motion.

33. A method as claimed in claim 28, wherein the analysis is enhanced chemiluminesence, the cell is a cup-shaped well and the optical measurement includes a luminometer for detecting emitted light from the sample.

34. A method according to claim 33, wherein the incubator is a rotating ring capable of holding the cup-shaped wells.

35. A method according to claim 34, wherein the motion is a back and forth motion.

36. A method according to claim 6, wherein the number of motions in a free cycle is the same as the maximum number of motions in active cycles.

37. A method according to claim 6, wherein the number of motions in a free cycle is the same as the average number of motions in cycles.
